(19) Europäisches Patentamt / European Patent Office / Office européen des brevets

(11) **EP 4 421 660 A1**

(12) **EUROPEAN PATENT APPLICATION**
published in accordance with Art. 153(4) EPC

(43) Date of publication:
**28.08.2024 Bulletin 2024/35**

(21) Application number: **23889857.1**

(22) Date of filing: **14.09.2023**

(51) International Patent Classification (IPC):
**G06F 17/16** $^{(2006.01)}$

(52) Cooperative Patent Classification (CPC):
**G06F 9/448; G06F 17/16**

(86) International application number:
**PCT/CN2023/118852**

(87) International publication number:
**WO 2024/125008 (20.06.2024 Gazette 2024/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.12.2022 CN 202211595645**

(71) Applicant: **Hygon Information Technology Co., Ltd.**
**Tianjin 300392 (CN)**

(72) Inventor: **HAN, Jie**
**Tianjin 300392 (CN)**

(74) Representative: **Regimbeau**
**20, rue de Chazelles**
**75847 Paris Cedex 17 (FR)**

(54) **DATA PROCESSING METHOD AND APPARATUS, AND ELECTRONIC DEVICE AND STORAGE MEDIUM**

(57) A data processing method and apparatus, an electronic device, and a storage medium are disclosed, and the data processing method includes: acquiring input matrix data, in which the input matrix data is a symmetric tridiagonal matrix; performing one or more matrix splits on the input matrix data to obtain a plurality of pieces of leaf node data; performing parallel computation on the plurality of pieces of leaf node data, to obtain a feature parameter of each piece of leaf node data among the plurality of pieces of leaf node data; performing at least one merge on the plurality of pieces of leaf node data, based on the feature parameter of the each piece of leaf node data, to obtain merged data; and performing feature solving on the input matrix data based on the merged data, to obtain a feature parameter of the input matrix data. The data processing method improves a resource invocation and utilization mode of a processor apparatus, which can fully invoke the resources of the processor apparatus for computing the plurality of pieces of leaf node data in a parallel manner, thereby alleviating the resource idle problem in the processor apparatus, and improving the computational efficiency of feature solving of the symmetric tridiagonal matrix in the processor apparatus.

S10 Acquiring input matrix data;

S20 Performing one or more matrix splits on the input matrix data to obtain a plurality of pieces of leaf node data;

S30 Performing parallel computation on the plurality of pieces of leaf node data, to obtain a feature parameter of each piece of leaf node data among the plurality of pieces of leaf node data;

S40 Performing at least one merge on the plurality of pieces of leaf node data, based on the feature parameter of the each piece of leaf node data, to obtain merged data;

S50 Performing feature solving on the input matrix data based on the merged data, to obtain a feature parameter of the input matrix data.

FIG. 3

EP 4 421 660 A1

**Description**

CROSS-REFERENCE TO RELATED APPLICATION

The present application claims the priority to Chinese Patent Application No. 202211595645.5, filed on December 12, 2022, the entire disclosure of which is incorporated herein by reference as portion of the present application.

TECHNICAL FIELD

Embodiments of the present disclosure relate to a data processing method and apparatus, an electronic device, and a storage medium.

BACKGROUND

The eigenvalue problem of a symmetric tridiagonal matrix exists in many fields such as scientific computing and engineering simulation, and feature solving of the symmetric tridiagonal matrix has broad application values in scientific studies such as computational materials, computational chemistry, and computational physics. In current computing devices such as a Central Processing Unit (CPU) and a Graphics Processing Unit (GPU), etc., feature solving of the symmetric tridiagonal matrix may be implemented through resource invocation.

SUMMARY

At least one embodiment of the present disclosure provides a data processing method, and the data processing method includes: acquiring input matrix data, in which the input matrix data is a symmetric tridiagonal matrix; performing one or more matrix splits on the input matrix data to obtain a plurality of pieces of leaf node data; performing parallel computation on the plurality of pieces of leaf node data, to obtain a feature parameter of each piece of leaf node data among the plurality of pieces of leaf node data; performing at least one merge on the plurality of pieces of leaf node data, based on the feature parameter of the each piece of leaf node data, to obtain merged data; and performing feature solving on the input matrix data based on the merged data, to obtain a feature parameter of the input matrix data.

For example, in the data processing method provided by at least one embodiment of the present disclosure, the feature parameter includes an eigenvalue and an eigenvector.

For example, in the data processing method provided by at least one embodiment of the present disclosure, performing parallel computation on the plurality of pieces of leaf node data includes: invoking a first library function to perform parallel computation on the plurality of pieces of leaf node data.

For example, in the data processing method provided by at least one embodiment of the present disclosure, performing at least one merge on the plurality of pieces of leaf node data, based on the feature parameter of the each piece of leaf node data, includes: invoking a second library function to perform at least one merge on the plurality of pieces of leaf node data, based on the feature parameter of the each piece of leaf node data.

For example, in the data processing method provided by at least one embodiment of the present disclosure, the symmetric tridiagonal matrix includes a plurality of diagonal elements and a plurality of minor diagonal elements; and performing one or more matrix splits on the input matrix data to obtain a plurality of pieces of leaf node data, includes: determining whether there is a first splitting point in the input matrix data, in which a point between two diagonal elements is taken as the first splitting point, in response to a product of adjacent diagonal matrices of two diagonal elements among the plurality of diagonal elements being greater than a minor diagonal element adjacent to the two diagonal elements; and performing a first split on the input matrix data into a plurality of first sub-matrices based on the first splitting point, in response to there being a first splitting point in the input matrix data.

For example, in the data processing method provided by at least one embodiment of the present disclosure, performing one or more matrix splits on the input matrix data to obtain a plurality of pieces of leaf node data, further includes: taking a first sub-matrix whose size is less than or equal to a first threshold as first leaf node data, in response to there being a first sub-matrix whose size is less than or equal to the first threshold among the plurality of first sub-matrices, in which the plurality of pieces of leaf node data include the first leaf node data obtained through the first split; and taking a first sub-matrix whose size is greater than the first threshold as matrix data to be split, in response to there being a first sub-matrix whose size is greater than the first threshold among the plurality of first sub-matrices.

For example, in the data processing method provided by at least one embodiment of the present disclosure, performing one or more matrix splits on the input matrix data to obtain a plurality of pieces of leaf node data, further includes: taking the input matrix data as matrix data to be split, in response to there being no first splitting point in the input matrix data.

For example, in the data processing method provided by at least one embodiment of the present disclosure, performing one or more matrix splits on the input matrix data to obtain a plurality of pieces of leaf node data, further includes: performing normalized update on the matrix data to be split; and performing cyclic recursive split on the matrix data to be split having subjected to the normalized update, to obtain a plurality of pieces of second leaf node data, in which the plurality of pieces of leaf node data include the plurality of pieces of second leaf node data obtained through the cyclic recursive split.

For example, in the data processing method provided by at least one embodiment of the present disclosure, performing cyclic recursive split on the matrix data to be split having subjected to the normalized update, includes: invoking a third library function to perform the cyclic recursive split on the matrix data to be split having subjected to the normalized update.

For example, in the data processing method provided by at least one embodiment of the present disclosure, performing parallel computation on the plurality of pieces of leaf node data, to obtain a feature parameter of each piece of leaf node data among the plurality of pieces of leaf node data, includes: invoking a first library function to perform parallel computation on the plurality of pieces of second leaf node data and the first leaf node data, to obtain a feature parameter of each piece of second leaf node data among the plurality of pieces of second leaf node data and a feature parameter of the first leaf node data.

For example, in the data processing method provided by at least one embodiment of the present disclosure, performing at least one merge on the plurality of pieces of leaf node data, based on the feature parameter of the each piece of leaf node data, to obtain merged data, includes: performing pairwise merge on each adjacent two pieces of leaf node data among the plurality of pieces of leaf node data, to obtain at least one piece of first merged data; and performing parallel computation on the at least one piece of first merged data based on the feature parameter of the each piece of leaf node data, to obtain a feature parameter of each piece of first merged data among the at least one piece of first merged data.

For example, in the data processing method provided by at least one embodiment of the present disclosure, performing pairwise merge on each adjacent two pieces of leaf node data among the plurality of pieces of leaf node data, includes: invoking a merge function library to perform pairwise merge on the each adjacent two pieces of leaf node data among the plurality of pieces of leaf node data.

For example, in the data processing method provided by at least one embodiment of the present disclosure, the feature parameter of the each piece of first merged data includes an eigenvalue and an eigenvector of the each piece of first merged data; a feature parameter of the each adjacent two pieces of leaf node data includes a plurality of eigenvalues, and the plurality of eigenvalues are combined to form a first eigenvalue sequence; and performing parallel computation on the at least one piece of first merged data based on the feature parameter of the each piece of leaf node data, to obtain a feature parameter of each piece of first merged data among the at least one piece of first merged data, includes: invoking a second library function to perform parallel computation on the at least one piece of first merged data, to obtain a first intermediate equation of the each piece of first merged data, in which the first intermediate equation includes the first eigenvalue sequence; pre-processing the each piece of first merged data in the second library function based on the first intermediate equation, to obtain a pre-processed eigenvalue sequence and a second intermediate equation; performing parallel computation on at least one second intermediate equation corresponding to the at least one piece of first merged data in the second library function, to obtain a feature parameter of the second intermediate equation corresponding to the each piece of first merged data, in which the feature parameter of the second intermediate equation includes a second eigenvalue and a second eigenvector, and the second eigenvalue is the eigenvalue of the each piece of first merged data; and multiplying the pre-processed eigenvalue sequence with the second eigenvector in the second library function, to obtain the eigenvector of the each piece of first merged data.

For example, in the data processing method provided by at least one embodiment of the present disclosure, pre-processing the each piece of first merged data in the second library function based on the first intermediate equation, to obtain a pre-processed eigenvalue sequence and a second intermediate equation, includes: invoking a fourth library function to reorder the first eigenvalue sequence, to obtain the pre-processed eigenvalue sequence; and invoking the fourth library function to perform parallel update computation on the at least one piece of first merged data based on the pre-processed eigenvalue sequence, to obtain at least one piece of updated first merged data and a second intermediate equation of each piece of updated first merged data among the at least one piece of updated first merged data.

For example, in the data processing method provided by at least one embodiment of the present disclosure, invoking the fourth library function to perform parallel update computation on the at least one piece of first merged data based on the pre-processed eigenvalue sequence, to obtain at least one piece of updated first merged data and a second intermediate equation of each piece of updated first merged data among the at least one piece of updated first merged data, includes: invoking the fourth library function to perform contraction processing on the pre-processed eigenvalue sequence, based on the pre-processed eigenvalue sequence; and invoking the fourth library function to perform parallel update computation on the at least one piece of first merged data based on the eigenvalue sequence having subjected to contraction processing, to obtain the at least one piece of updated first merged data and the second intermediate equation of the each piece of updated first merged data.

For example, in the data processing method provided by at least one embodiment of the present disclosure, in response to the plurality of pieces of leaf node data including two pieces of leaf node data, the first merged data is the merged data.

For example, in the data processing method provided by at least one embodiment of the present disclosure, in response to the plurality of pieces of leaf node data including more than two pieces of second leaf node data, performing at least one merge on the plurality of pieces of leaf node data, based on the feature parameter of the each piece of leaf node data, to obtain merged data, further includes: performing at least one merge and at least one parallel computation on the at least one piece of first merged data based on the feature parameter of the each piece of first merged data, to obtain the merged data.

For example, in the data processing method provided by at least one embodiment of the present disclosure, performing feature solving on the input matrix data based on the merged data, to obtain a feature parameter of the input matrix data, includes: performing feature solving on the merged data, to obtain a feature parameter of the merged data; and performing inverse normalized update on the feature parameter of the merged data, to obtain the feature parameter of the input matrix data.

For example, in the data processing method provided by at least one embodiment of the present disclosure, the symmetric tridiagonal matrix is a double-precision matrix.

At least one embodiment of the present disclosure further provides a data processing apparatus, and the data processing apparatus includes: an acquiring module, which is configured to acquire input matrix data, in which the input matrix data is a symmetric tridiagonal matrix; a splitting module, which is configured to perform matrix split on the input matrix data to obtain a plurality of pieces of leaf node data; a computing module, which is configured to perform parallel computation on the plurality of pieces of leaf node data, to obtain a feature parameter of each piece of leaf node data among the plurality of pieces of leaf node data; a merging module, which is configured to perform at least one merge on the plurality of pieces of leaf node data, based on the feature parameter of the each piece of leaf node data, to obtain merged data; and a feature solving module, which is configured to perform feature solving on the input matrix data based on the merged data, to obtain a feature parameter of the input matrix data.

For example, in the data processing apparatus provided by at least one embodiment of the present disclosure, the feature parameter includes an eigenvalue and an eigenvector.

For example, in the data processing apparatus provided by at least one embodiment of the present disclosure, the computing module is further configured to invoke a first library function to perform parallel computation on the plurality of pieces of leaf node data.

For example, in the data processing apparatus provided by at least one embodiment of the present disclosure, the merging module is further configured to invoke a second library function to perform at least one merge on the plurality of pieces of leaf node data based on the feature parameter of the each piece of leaf node data.

For example, in the data processing apparatus provided by at least one embodiment of the present disclosure, the feature solving module is further configured to: perform feature solving on the merged data, to obtain a feature parameter of the merged data; and perform inverse normalized update on the feature parameter of the merged data, to obtain the feature parameter of the input matrix data.

At least one embodiment of the present disclosure further provides an electronic device, and the electronic device includes: a processor; and a memory, including one or more computer program modules, in which the one or more computer program modules are stored in the memory and are configured to be executed by the processor, and the one or more computer program modules are configured to implement the data processing method according to any one of the embodiments of the present disclosure.

At least one embodiment of the present disclosure further provides a storage medium, which stores non-transitory computer readable instructions, and the non-transitory computer readable instructions, when executed by a computer, implement the data processing method according to any one of the embodiments of the present disclosure.

BRIEF DESCRIPTION OF DRAWINGS

In order to clearly illustrate the technical solution of the embodiments of the present disclosure, the drawings of the embodiments will be briefly described. It is obvious that the described drawings in the following are only related to some embodiments of the present disclosure and thus are not limitative of the present disclosure.

FIG. 1 is a schematic diagram of a symmetric tridiagonal matrix;
FIG. 2 is a schematic diagram of equivalent transformation of the symmetric tridiagonal matrix in FIG. 1;
FIG. 3 is an exemplary flowchart of a data processing method provided by at least one embodiment of the present disclosure;
FIG. 4 is a schematic diagram of an example of a multi-layer data framework of a data processing method provided by at least one embodiment of the present disclosure;

FIG. 5 is a schematic diagram of an example of a library function invocation flow provided by at least one embodiment of the present disclosure;

FIG. 6 is an exemplary flowchart of performing a first split on input matrix data in step S20 of FIG. 2;

FIG. 7 is a schematic diagram of an example of performing a first split on a symmetric tridiagonal matrix provided by at least one embodiment of the present disclosure;

FIG. 8 is a schematic diagram of an example of performing normalized update on matrix data to be split provided by at least one embodiment of the present disclosure;

FIG. 9 is a schematic diagram of an example of performing parallel computation on a plurality of pieces of leaf node data provided by at least one embodiment of the present disclosure;

FIG. 10 is a schematic diagram of an example of pre-processing first merged data provided by at least one embodiment of the present disclosure;

FIG. 11 is a schematic diagram of an example of performing parallel computation on a second intermediate equation provided by at least one embodiment of the present disclosure;

FIG. 12 is a schematic diagram of an example of merging to obtain merged data provided by at least one embodiment of the present disclosure;

FIG. 13 is a schematic block diagram of a data processing apparatus provided by at least one embodiment of the present disclosure;

FIG. 14 is a schematic block diagram of an electronic device provided by at least one embodiment of the present disclosure;

FIG. 15 is a schematic block diagram of another electronic device provided by at least one embodiment of the present disclosure; and

FIG. 16 is a schematic diagram of a storage medium provided by at least one embodiment of the present disclosure.

## DETAILED DESCRIPTION

In order to make objects, technical details and advantages of the embodiments of the present disclosure apparent, the technical solutions of the embodiments will be described in a clearly and fully understandable way in connection with the drawings related to the embodiments of the present disclosure. Apparently, the described embodiments are just a part but not all of the embodiments of the present disclosure. Based on the described embodiments herein, those skilled in the art can obtain other embodiment(s), without any inventive work, which should be within the scope of the disclosure.

Unless otherwise defined, all the technical and scientific terms used herein have the same meanings as commonly understood by one of ordinary skill in the art to which the present disclosure belongs. The terms "first," "second," etc., which are used in the description and the claims of the present application for disclosure, are not intended to indicate any sequence, amount or importance, but distinguish various components. The terms "comprise," "comprising," "include," "including," etc., are intended to specify that the elements or the objects stated before these terms encompass the elements or the objects and equivalents thereof listed after these terms, but do not preclude the other elements or objects. The phrases "connect", "connected", etc., are not intended to define a physical connection or mechanical connection, but may include an electrical connection, directly or indirectly. "On," "under," "left," "right" and the like are only used to indicate relative position relationship, and when the position of the object which is described is changed, the relative position relationship may be changed accordingly.

The present disclosure is described below through several specific embodiments. In order to keep the following description of the embodiments of the present disclosure clear and concise, detailed descriptions of known functions and components may be omitted. When any component of the embodiments of the present disclosure appears in more than one of the drawings, the component is indicated by the same or similar reference mark in each of the drawings.

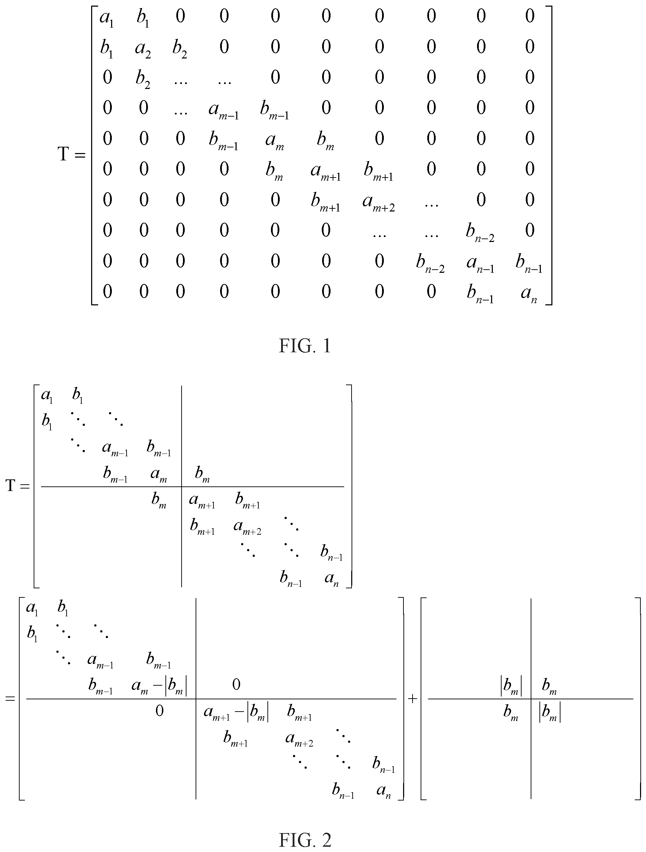

FIG. 1 is a schematic diagram of a symmetric tridiagonal matrix.

For example, non-zero coefficients of a tridiagonal matrix are located on a major diagonal and two minor diagonals; and with respect to a symmetric tridiagonal matrix, elements on the two minor diagonals are identical. For example, as shown in FIG. 1, T represents a symmetric tridiagonal matrix, elements on a diagonal thereof are $a_1$, $a_2$, ..., $a_m$, ..., $a_n$, elements on a minor diagonal are bi, $b_2$, ..., $b_m$, ..., $b_n$, and all other elements are 0, where n is a positive integer, m=1, 2, ..., n.

For example, a feature decomposition method for the symmetric tridiagonal matrix shown in FIG. 1 includes QR decomposition, dichotomy, divide and conquer, and so on. Time complexity of QR decomposition and dichotomy are relatively high (e.g., $O(n^2)$), which is only used for feature solving of small and medium-scale matrices; divide and conquer has a fast convergence speed and low time complexity (e.g., nlog(n)), and may be used for solving large-scale matrix feature problems. For example, by divide and conquer, the symmetric tridiagonal matrix shown in FIG. 1 may be split into several sub-matrices; firstly, feature decomposition of the sub-matrices is solved, and then computation results of the sub-matrices are merged level by level, which are finally substituted as feature decomposition of the original matrix.

FIG. 2 is a schematic diagram of equivalent transformation of the symmetric tridiagonal matrix in FIG. 1.

For example, in divide and conquer, the symmetric tridiagonal matrix in FIG. 1 is firstly split. For example, as shown in FIG. 2, two elements $a_m$ and $a_{m+1}$ on the diagonal of the symmetric tridiagonal matrix T in FIG. 1 may be respectively subtracted by $|b_m|$, and two elements $b_m$ on the minor diagonals of T may be respectively subtracted by $b_m$, to split T into two matrices: one is a new symmetric tridiagonal matrix after extracting $b_m$ and $|b_m|$, and the other is a symmetric matrix composed of $b_m$ and $|b_m|$. For example, as shown in FIG. 2, the new symmetric tridiagonal matrix are composed of two symmetric tridiagonal sub-matrices, in an upper left corner and in a lower right corner, respectively.

For example, FIG. 2 may be simplified to a form of Formula (1) as follows:

$$\mathrm{T} = \begin{bmatrix} T_1 & O \\ O & T_2 \end{bmatrix} + \rho v v^T \qquad\qquad \text{Formula (1)}$$

where

$$v = \begin{cases} [0,\ldots,1,1,0,\ldots,0]^T, & b_m > 0 \\ [0,\ldots,-1,1,0,\ldots,0]^T, & b_m < 0 \end{cases}$$

For example, in Formula (1), $T_1$ is a symmetric tridiagonal sub-matrix in the upper left corner, $T_2$ is a symmetric tridiagonal sub-matrix in the lower right corner, O is a zero matrix; $\rho v v^T$ represents a symmetric matrix composed of $b_m$ and $|b_m|$, where $\rho = |b_m|$, when $b_m > 0$, $v = [0,...,1,1,0,...,0]^T$; when $b_m < 0$, $v = [0,...,-1,1,0,...,0]^T$. For example, $v$ contains n elements, and $v$ is composed of two portions: a first portion is $[0,..., \pm 1]^T$ including m elements, and a second portion is $[1,0,...,0]^T$ including n-m elements.

For example, $\Lambda_1$ and $\Lambda_2$ are respectively eigenvalues of $T_1$ and $T_2$, and $Q_1$ and $Q_2$ are respectively eigenvectors of $T_1$ and $T_2$ (i.e., $T_1 = Q_1 \Lambda_1 Q_1^T$, $T_2 = Q_2 \Lambda_2 Q_2^T$ ), so that feature decomposition of T may be obtained in a form of Formula (2) as follows:

$$\mathrm{T} = \begin{bmatrix} Q_1 \Lambda_1 Q_1^T & O \\ O & Q_2 \Lambda_2 Q_2^T \end{bmatrix} + \rho v v^T = \begin{bmatrix} Q_1 & O \\ O & Q_2 \end{bmatrix} \left\{ \begin{bmatrix} \Lambda_1 & O \\ O & \Lambda_2 \end{bmatrix} + \rho z z^T \right\} \begin{bmatrix} Q_1^T & O \\ O & Q_2^T \end{bmatrix} \; \text{Formula (2)}$$

where

$$z = \begin{bmatrix} Q_1^T & O \\ O & Q_2^T \end{bmatrix} v$$

For example, an intermediate equation in Formula (2) may be represented as Z in a form of Formula (3) as follows:

$$Z = D + \rho z z^T = \begin{bmatrix} \Lambda_1 & O \\ O & \Lambda_2 \end{bmatrix} + \rho z z^T \qquad\qquad \text{Formula (3)}$$

For example, D in formula (3) is subjected to reordering, contraction, and other processing to obtain updated D'=diag(di, $d_2$, ..., $d_n$), and $d_1 > d_2 > ... > d_n$. For example, based on the updated D' and the intermediate equation Z, a secular equation may be obtained: Z'= D'+ρz'z'T. For example, eigenvalues of the secular equation Z' are eigenvalues after merging the current two split blocks $T_1$ and $T_2$. For example, if the eigenvalue of the secular equation Z' is λ, then (D' - λI)$^{-1}$z' is an eigenvector of the secular equation Z', where I is an identity matrix (i.e. the major diagonal includes n elements whose value is 1, and the other elements are 0), expressed as I=diag(1, 1, ..., 1).

With respect to a small-scale symmetric tridiagonal matrix, serial feature solving is performed in the CPU through a method such as orthogonal trigonometric (QR) decomposition, and serial computation takes longer time; with respect to a large-scale symmetric tridiagonal matrix, divide and conquer may be adopted for parallel feature solving in a processor apparatus such as a GPU, and parallel computation reduces computational time and improves computational efficiency. However, when performing feature solving on the symmetric tridiagonal matrix in the processor apparatus such as a GPU, it is necessary to firstly split the symmetric tridiagonal matrix into a plurality of pieces of leaf node data whose size less than a specific threshold; and when calculating the plurality of pieces of leaf node data, it is still necessary to invoke specific resources one by one for serial solving in the CPU, resulting in idle resources in the processor apparatus such as a GPU and causing significant latency.

At least one embodiment of the present disclosure provides a data processing method, and the data processing method includes: acquiring input matrix data, in which the input matrix data is a symmetric tridiagonal matrix; performing one or more matrix splits on the input matrix data to obtain a plurality of pieces of leaf node data; performing parallel computation on the plurality of pieces of leaf node data to obtain a feature parameter of each piece of leaf node data among the plurality of pieces of leaf node data; performing at least one merge on the plurality of pieces of leaf node data, based on the feature parameter of the each piece of leaf node data, to obtain merged data; and performing feature solving on the input matrix data based on the merged data, to obtain a feature parameter of the input matrix data.

At least one embodiment of the present disclosure further provides a data processing apparatus, an electronic device and a storage medium, for implementing the data processing method of the above-described embodiment.

The method, the apparatus, the device and the storage medium provided by at least one embodiment of the present disclosure improve a resource invocation and utilization mode of a processor apparatus (e.g., a GPU), which can fully invoke resources of the processor apparatus for computing the plurality of pieces of leaf node data in a parallel manner without invoking specific resources one by one for solving the plurality of pieces of leaf node data in a serial manner in the CPU, thereby alleviating the resource idle problem in the processor apparatus, and improving the computational efficiency of feature solving of the symmetric tridiagonal matrix in the processor apparatus.

Hereinafter, at least one embodiment of the present disclosure will be explained in detail with reference to the drawings. It should be noted that same reference signs in different drawings will be used to refer to same components that have already been described.

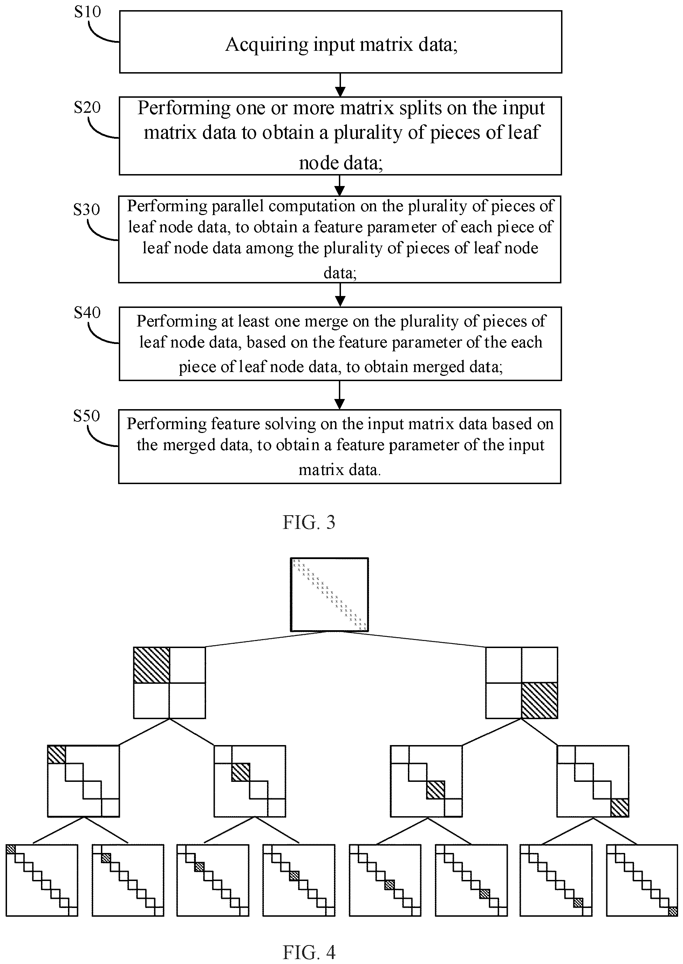

FIG. 3 is an exemplary flowchart of a data processing method provided by at least one embodiment of the present disclosure; and FIG. 4 is a schematic diagram of an example of a multi-layer data framework of a data processing method provided by at least one embodiment of the present disclosure. For example, FIG. 4 is an example of a multi-layer data framework of the data processing method in FIG. 3.

For example, as shown in FIG. 3, at least one embodiment of the present disclosure provides a data processing method that may be used for performing feature solving on a symmetric tridiagonal matrix in a processor apparatus (e.g., a GPU) through divide and conquer. For example, the method includes steps S10 to S50 below.

Step S10: acquiring input matrix data.

Step S20: performing one or more matrix splits on the input matrix data to obtain a plurality of pieces of leaf node data.

Step S30: performing parallel computation on the plurality of pieces of leaf node data, to obtain a feature parameter of each piece of leaf node data among the plurality of pieces of leaf node data.

Step S40: performing at least one merge on the plurality of pieces of leaf node data, based on the feature parameter of the each piece of leaf node data, to obtain merged data.

Step S50: performing feature solving on the input matrix data based on the merged data, to obtain a feature parameter of the input matrix data.

For example, in step S10, the input matrix data is, for example, the symmetric tridiagonal matrix shown in FIG. 1. For example, in some examples, the input matrix data is a double-precision symmetric tridiagonal matrix.

For example, in step S20, the input matrix data acquired in S10 is subjected to one or more matrix splits. For example, the input matrix data is subjected to cyclic recursive split into blocks of different sizes, until a size of the split block is less than or equal to a first threshold, and the split block is taken as leaf node data and is no longer split. For example, the plurality of pieces of leaf node data are shown as block data of a bottom layer in FIG. 4.

For example, in step S30, a first library function may be invoked to perform parallel computation on the plurality of pieces of leaf node data, to obtain a feature parameter of each piece of leaf node data among the plurality of pieces of leaf node data. For example, the first library function is a library function used in a processor apparatus (e.g., a GPU) for solving the feature parameter of the symmetric tridiagonal matrix. For example, by invoking the first library function once, feature parameters of the plurality of pieces of leaf node data may be obtained, thereby implementing parallel computation on the plurality of pieces of leaf node data. For example, the feature parameter includes an eigenvalue and an eigenvector.

For example, in step S40, the multi-layer data framework of the merge process is as shown in FIG. 4. For example, as shown in FIG. 4, based on a feature parameter of each piece of leaf node data, the plurality of pieces of leaf node data may be subjected to a plurality of merges from bottom to top; based on a feature parameter of the leaf node data of the bottom layer obtained in step S30, firstly, the plurality of pieces of leaf node data are respectively merged in pairs, the merged pieces of data are further merged upward to a next layer for solution, and then iterative merge is continued for solution, so as to obtain merged data. For example, the merged data is the largest merged block of a top layer in FIG. 4.

For example, in step S40, a second library function may be invoked to perform at least one merge on the plurality of pieces of leaf node data. For example, the second library function is a library function used in a processor apparatus (e.g., a GPU) for solving a feature parameter of updated data after one merge of the diagonal matrix. For example, in each merge among the at least one merge, the second library function may be invoked once. For example, by invoking the second library function just once, feature parameters of a plurality of pieces of updated data after merge may be obtained, thereby implementing parallel computation on the plurality of pieces of updated data after merge.

For example, in step S50, feature solving may be performed based on the merged data in FIG. 4, to finally obtain the eigenvalue and the eigenvector of the input matrix data, thereby completing feature decomposition of the entire matrix.

It should be noted that the multi-layer data framework in FIG. 4 is only an example, and the input matrix data may also be divided into other forms according to actual situations, which will not be limited in the embodiments of the present disclosure.

In some examples, the data processing method according to the embodiments of the present disclosure may be implemented by invoking a plurality of library functions in a processor apparatus (e.g., a GPU). For example, the plurality of library functions may be built on their own, or directly obtained through hardware platforms, so that algorithms may be constructed by invoking library functions with different functions for performing feature solving on the input matrix data in the processor apparatus; and specific forms of the library functions will not be limited in the embodiments of the present disclosure.

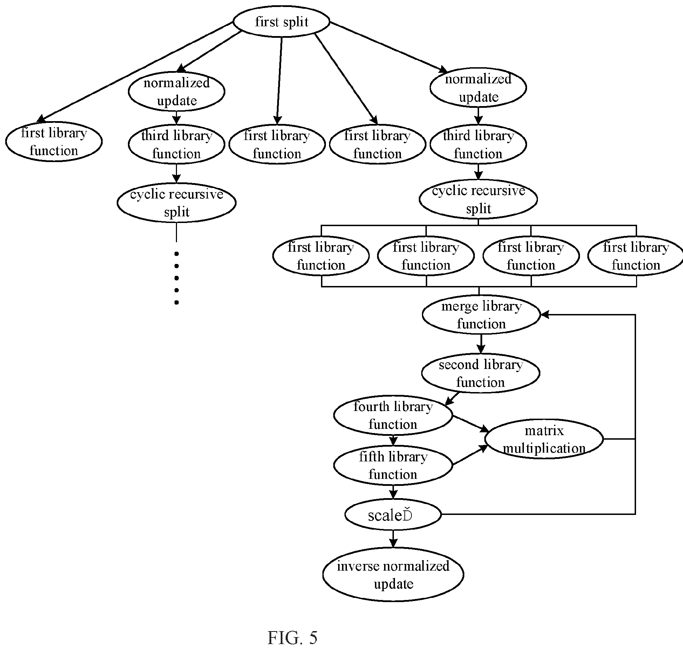

FIG. 5 is a schematic diagram of an example of a library function invocation flow provided by at least one embodiment of the present disclosure. For example, by using the library function invocation process shown in FIG. 5, the data processing method shown in FIG. 3 may be implemented in a processor apparatus (e.g., a GPU).

For example, as shown in FIG. 5, with respect to step S20, firstly, the input matrix data acquired in step S10 is subject to a first split into a plurality of first sub-matrices, a first sub-matrix less than or equal to the first threshold may be directly taken as leaf node data (e.g., referred to as first leaf node data), and a first sub-matrix greater than the first threshold may be taken as data to be split for further splitting; secondly, matrix data to be split is further subjected to normalized update, and then a third library function is invoked for performing cyclic recursive split on the matrix data to be split after normalized update, to obtain a plurality of pieces of leaf node data (e.g., referred to as second leaf node data). For example, the leaf node data may be block data of a bottom layer in FIG. 4.

For example, as shown in FIG. 5, with respect to step S30, the first library function is invoked to perform parallel computation on the plurality of pieces of leaf node data (including all first leaf node data and all second leaf node data), to obtain a feature parameter of each piece of leaf node data.

For example, in the above-described process of executing step S30, by invoking the first library function just once, feature parameters of the plurality of pieces of leaf node data may be obtained, thereby implementing parallel computation on the plurality of pieces of leaf node data.

For example, as shown in FIG. 5, with respect to step S40, a merge library function is invoked to perform pairwise merge on each adjacent two pieces of leaf node data among the plurality of pieces of leaf node data, to obtain at least one piece of first merged data. For example, the first merged data may be block data in a second to last layer in FIG. 4. For example, adjacent two pieces of leaf node data may be $T_1$ and $T_2$ in Formula (1), and first merged data T obtained by merging $T_1$ and $T_2$ may be decomposed into the form in Formula (2) by feature decomposition.

For example, as shown in FIG. 5, based on the feature parameter of the each piece of leaf node data obtained in step S30, by invoking the second library function to perform parallel computation on at least one piece of first merged data, a feature parameter of each piece of first merged data may be obtained. For example, in the process of invoking the second library function, a fourth library function may be invoked to pre-process (e.g., reorder, etc.) the each piece of first merged data; then perform parallel update computation on the at least one piece of first merged data, so that the secular equation may be obtained. For example, a fifth library function is invoked in the second library function to compute the secular equation, and then matrix multiplication is performed on the data obtained by invoking the fourth library function and the fifth library function, to obtain the feature parameter (e.g., an eigenvalue and an eigenvector) of the first merged data.

For example, in the above-described process of executing step S40, by invoking the second library function just once, the feature parameter of the at least one piece of first merged data may be obtained, thereby implementing parallel computation on the at least one piece of first merged data.

For example, if the plurality of pieces of leaf node data includes more than two pieces of second leaf node data (i.e., a plurality of pieces of first merged data are obtained through merges, as shown in FIG. 4), the plurality of pieces of first merged data need to be further merged. For example, as shown in FIG. 5, in step S40, based on the feature parameter of the each piece of first merged data as obtained above, at least one merge and at least one parallel computation are iteratively performed on the plurality of pieces of first merged data; and each iterative merge and parallel computation is performed by means of library function invocation in step S40, so as to obtain the merged data. For example, the merged data may be the largest merged block of the top layer in FIG. 4.

For example, as shown in FIG. 5, with respect to step S50, library function invocation of step S40 is continued to perform feature solving on the merged data, to obtain the feature parameter of the merged data; and an inverse normalized update is performed on the feature parameter of the merged data, to finally obtain the feature parameter of the input matrix data.

It should be noted that if the plurality of pieces of second leaf node data obtained in step S20 only includes two pieces of leaf node data, then the first merged data is the merged data; that is, computation in step S40 is implemented only once so that the merged data may be obtained.

It should be noted that the library function invocation flow in FIG. 5 is only an example, and selection and invocation of library functions may be made based on actual situations, which will not be limited in the embodiments of the present disclosure.

The data processing method provided by at least one embodiment of the present disclosure improves the resource (e.g., a plurality of library functions shown in FIG. 5) invocation and utilization mode of a processor apparatus (e.g., a GPU), which can fully invoke resources of the processor apparatus for computing the plurality of pieces of leaf node data in a parallel manner without invoking specific resources one by one for solving the plurality of pieces of leaf node data in a serial manner in the CPU, thereby alleviating the resource idle problem in the processor apparatus, and improving the computational efficiency of feature solving of the symmetric tridiagonal matrix in the processor apparatus.

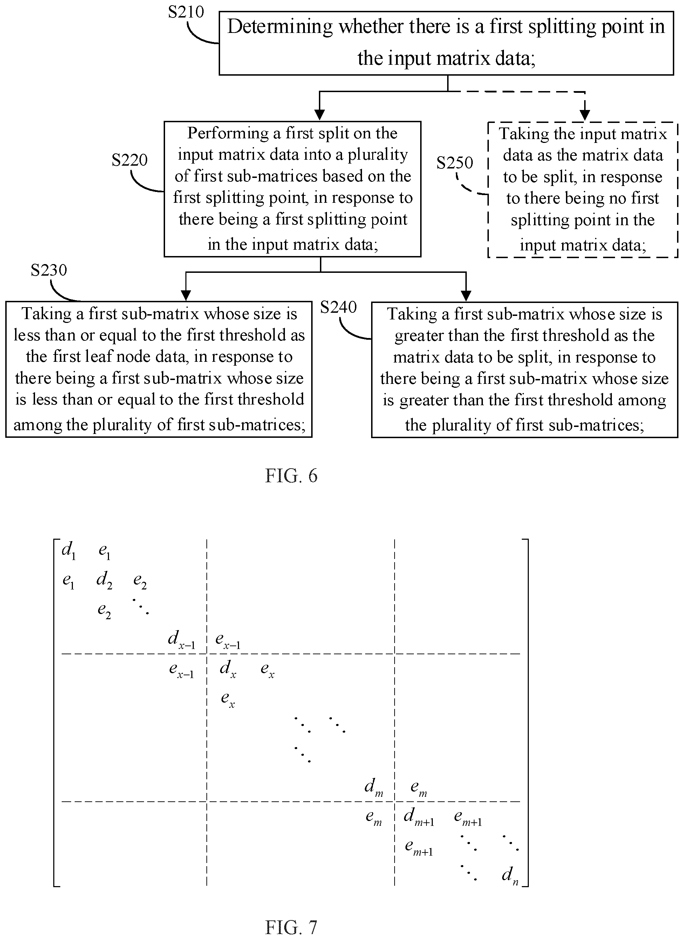

FIG. 6 is an exemplary flowchart of performing a first split on the input matrix data in step S20 of FIG. 2; and FIG. 7 is a schematic diagram of an example of performing a first split on a symmetric tridiagonal matrix provided by at least one embodiment of the present disclosure. For example, FIG. 7 is a specific example of a first split in FIG. 5.

For example, performing the first split on the input matrix data shown in FIG. 6 includes steps S210 to S240.

Step S210: determining whether there is a first splitting point in the input matrix data.

Step S220: performing a first split on the input matrix data into a plurality of first sub-matrices based on the first splitting point, in response to there being a first splitting point in the input matrix data.

Step S230: taking a first sub-matrix whose size is less than or equal to the first threshold as the first leaf node data, in response to there being a first sub-matrix whose size is less than or equal to the first threshold among the plurality of first sub-matrices.

Step S240: taking a first sub-matrix whose size is greater than the first threshold as the matrix data to be split, in response to there being a first sub-matrix whose size is greater than the first threshold among the plurality of first sub-matrices.

For example, in step S210, the symmetric tridiagonal matrix includes a plurality of diagonal elements on the major diagonal and a plurality of minor diagonal elements on the minor diagonals (the two minor diagonals are symmetrical with each other); if a product of adjacent diagonal matrices of two diagonal elements among the plurality of diagonal elements is greater than a minor diagonal element adjacent to the two diagonal elements, then a point between the two diagonal elements is taken as the first splitting point.

For example, in step S220, if it is recognized that there is the above-described first splitting point (the number of which may be one or more) in the input matrix data, the input matrix data may be subjected to a first split at the first splitting point into a plurality of first sub-matrices.

For example, further, with respect to the plurality of first sub-matrices obtained in step S220, in step S230, if there is a first sub-matrix whose size is less than or equal to the first threshold among the plurality of first sub-matrices, then the first sub-matrix whose size is less than or equal to the first threshold may be taken as the first leaf node data (i.e. directly taken as leaf node data); in step S240, if there is a first sub-matrix whose size is greater than the first threshold among the plurality of first sub-matrices, then the first sub-matrix whose size is greater than the first threshold may be taken as the matrix data to be split. For example, the plurality of pieces of leaf node data not only include the first leaf node data obtained through the above-described first split, but also include the second leaf node data less than the first threshold obtained by further splitting the matrix data to be split.

For example, in some examples, performing a first split on the input matrix data shown in FIG. 6 further includes step S250: taking the input matrix data as the matrix data to be split, in response to there being no first splitting point in the input matrix data. That is, if there is no first splitting point in the input matrix data, the first split may be omitted and the input matrix data may be directly taken as the matrix data to be split.

For example, as shown in FIG. 7, assuming that the plurality of diagonal elements on the major diagonal are $d_1$, $d_2$, ..., $d_m$, ..., $d_n$, the plurality of minor diagonal elements on the minor diagonals are $e_1$, $e_2$, ..., $e_m$, ..., $e_n$ (the two minor diagonals are symmetrical with each other), where n is a positive integer, m=1, 2, ..., n. For example, with respect to two diagonal elements $d_i$ and $d_{i+1}$ as well as minor diagonal elements $e_i$ adjacent thereto (where i=1, 2, ..., n), a product $DBL\_EPSILON \times sqrt(d_i * d_{i+1})$ of adjacent diagonal matrices of $d_i$ and $d_{i+1}$ is compared with the minor diagonal element $e_i$ (where DBL_EPSILON is a constant related to recognition precision; for example, in a double-precision type, DBL_EPSILON is minimum recognizable precision): if the former is greater than the latter, the matrix is considered to be below a precision threshold at the minor diagonal element value ei, and a point between the two e; is taken as the first splitting point (i.e., the matrix may be split at the point). For example, as shown in FIG. 7, because $DBL\_EPSILON * sqrt(d_{x-1} * d_x) > e_{x-1}$, a point between two $e_{x-1}$ is taken as the first splitting point, and the matrix is split at dashed lines

of $d_{x-1}$ and $d_x$ (where x is a positive integer less than m); because DBL_EPSILON * sqrt($d_m$ * $d_{m+1}$) > $e_m$, a point between two $e_m$ is taken as the first splitting point, and the matrix is split along dashed lines at $d_m$ and $d_{m+1}$.

For example, as shown in FIG. 7, after the above-described first split, 3 first sub-matrices are obtained, that is, the 3 tridiagonal matrices are obtained by splitting through dashed lines on the major diagonal in FIG. 7. For example, in the case where the first threshold is 25, if the size of a first sub-matrix in an upper left corner is less than or equal to 25 (i.e., x-1<=25), the first sub-matrix in the upper left corner may be taken as the first leaf node data; if the size of a first sub-matrix in a lower right corner is also less than or equal to 25 (i.e., n-m<=25), the first sub-matrix in the lower right corner may also be taken as the first leaf node data; if the size of a first sub-matrix in the middle is greater than 25 (i.e., m-x+1>25), the first sub-matrix in the middle may be taken as the matrix data to be split.

It should be noted that the first threshold may be 25, or other values that may be selected according to actual needs, which will not be limited in the embodiments of the present disclosure.

For example, with respect to the first leaf node data obtained through the first split, all the first leaf node data may be firstly put into a list for subsequent computation; and with respect to the data to be split obtained through the first split, all the data to be split may be put into another list for further split.

For example, step S20 in FIG. 3 further includes: performing normalized update on the matrix data to be split; that is, before further splitting the data to be split, the data to be split may be firstly subjected to normalized update. For example, all diagonal elements and minor diagonal elements of the data to be split may be normalized after solving for a maximum value, to update all diagonal elements and minor diagonal elements of the data to be split, thereby preventing computation overflow caused by an element value in the data to be split exceeding a hardware allowed threshold.

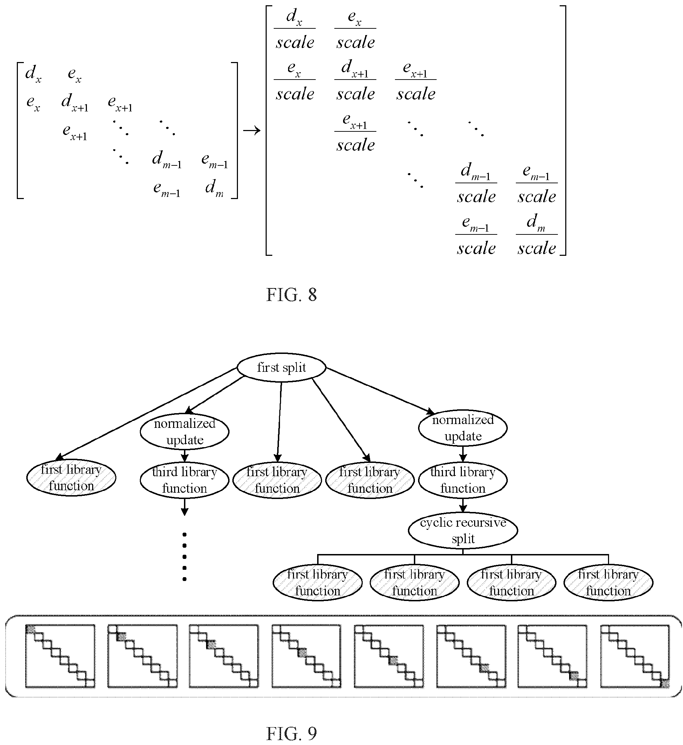

FIG. 8 is a schematic diagram of an example of performing normalized update on the matrix data to be split provided by at least one embodiment of the present disclosure. For example, FIG. 8 is a specific example of performing normalized update on the matrix data to be split obtained from the first split in FIG. 7.

For example, as shown in FIG. 8, with respect to the matrix data to be split obtained from the first split in FIG. 7 (the matrix on the left in FIG. 8), a maximum absolute value $d_{max}$ is taken from the diagonal elements $d_x$ to $d_m$, a maximum absolute value $e_{max}$ is taken from the minor diagonal elements $e_x$ to $e_{m-1}$, and a maximum value between $d_{max}$ and $e_{max}$ is selected as scale (scale is a normalized maximum value); then, all elements of the data to be split are respectively divided by scale, to update the diagonal elements and the minor diagonal elements, so as to obtain the matrix data to be split subjected to normalized update (the matrix on the right in FIG. 8).

For example, after performing normalized update on the matrix data to be split, step S20 in FIG. 3 further includes: performing cyclic recursive split on the matrix data to be split having subjected to normalized update, to obtain a plurality of pieces of second leaf node data. For example, as shown in FIG. 5, the third library function may be invoked to perform cyclic recursive split on the matrix data to be split having subjected to normalized update. For example, as described above, the plurality of pieces of leaf node data include a plurality of pieces of second leaf node data obtained through cyclic recursive split. For example, the size of each piece of second leaf node data is also less than or equal to the first threshold.

For example, in some examples, cyclic recursive bi-section split may be performed on the matrix data to be split, until the size of the split matrix data meets a condition of being less than or equal to the first threshold (e.g., 25), and thus the split matrix data is taken as the second leaf node data and no longer split. For example, the number of splits on the matrix data to be split is close to log(N, 2), where N is an original size of the matrix data to be split. For example, in the case where N=1600 and the first threshold is 25, the size changes sequentially as: 1600, 800, 400, 200, 100, 50, 25, through respective bi-section splits, that is, a total of 6 splits.

FIG. 9 is a schematic diagram of an example of performing parallel computation on a plurality of pieces of leaf node data provided by at least one embodiment of the present disclosure. For example, FIG. 9 is an example of invoking the first library function to perform parallel computation on the plurality of pieces of leaf node data in FIG. 5.

For example, as shown in FIG. 9, the bottom layer includes a plurality of pieces of leaf node data, and the plurality of pieces of leaf node data may be the block data of the bottom layer in FIG. 4. For example, in step S30 of FIG. 3, based on the first leaf node data obtained from the first split and the plurality of pieces of second leaf node data obtained by performing cyclic recursive split on the data to be split, the first library function is invoked to perform parallel computation on the plurality of pieces of second leaf node data and first leaf node data, and a feature parameter of each piece of second leaf node data and a feature parameter of the first leaf node data may be obtained. For example, the feature parameter includes an eigenvalue and an eigenvector.

For example, as shown in FIG. 9, by invoking the first library function just once, feature parameters of all first leaf node data and second leaf node data may be obtained, thereby implementing parallel computation on a plurality of pieces of leaf node data.

For example, after obtaining the feature parameter of the each piece of leaf node data, step S40 in FIG. 3 includes: performing pairwise merge on each adjacent two pieces of leaf node data among the plurality of pieces of leaf node data, to obtain at least one piece of first merged data. For example, as shown in FIG. 5, a merge library function may be invoked to perform pairwise merge on each adjacent two pieces of leaf node data among the plurality of pieces of leaf node data, to obtain at least one piece of first merged data.

For example, after obtaining the at least one piece of first merged data, step S40 in FIG. 3 further includes: performing parallel computation on at least one piece of first merged data based on the feature parameter of the each piece of leaf node data, to obtain a feature parameter of each piece of first merged data among the at least one piece of first merged data. For example, the feature parameter of the each piece of first merged data includes an eigenvalue and an eigenvector of the each piece of first merged data.

For example, further in step S40 of FIG. 3, performing parallel computation on at least one piece of first merged data includes: invoking the second library function to perform parallel computation on at least one piece of first merged data of the leaf node, to obtain a first intermediate equation of each piece of first merged data of the leaf node; pre-processing each piece of first merged data of the leaf node in the second library function of the leaf node based on the first intermediate equation of the leaf node, to obtain a pre-processed eigenvalue sequence and a second intermediate equation; performing parallel computation on a second intermediate equation of at least one leaf node corresponding to at least one piece of first merged data of the leaf node in the second library function of the leaf node, to obtain a feature parameter of the second intermediate equation of the leaf node corresponding to each piece of first merged data of the leaf node; and multiplying the pre-processed eigenvalue sequence of the leaf node with the second eigenvector of the leaf node in the second library function of the leaf node, to obtain an eigenvector of each piece of first merged data.

For example, if an i-th piece of leaf node data is expressed as $T_i$, where an eigenvalue of $T_i$ obtained by invoking the first library function is $\Lambda_i$, and an eigenvector of $T_i$ is $Q_i$, then each piece of leaf node data $T_i$ may be expressed as

$$T_i = Q_i \Lambda_i Q_i^T$$

, where i is a positive integer and i is less than or equal to the total number of pieces of leaf node data. For example, two adjacent pieces of leaf node data may be $T_1$ and $T_2$ in Formula (1), where $\Lambda_1$ and $\Lambda_2$ are respectively eigenvalues of $T_1$ and $T_2$, $Q_1$ and $Q_2$ are respectively eigenvectors of $T_1$ and $T_2$, then

$$T_1 = Q_1 \Lambda_1 Q_1^T, T_2 = Q_2 \Lambda_2 Q_2^T.$$

For example, as shown in FIG. 5, the merge library function is invoked to merge $T_1$ and $T_2$ and obtain first merged data T, and the first merged data T may be subjected to feature decomposition into the form in Formula (2); then, the second library function is invoked to perform parallel computation on at least one piece of first merged data to obtain a first intermediate equation of each piece of first merged data. For example, the first intermediate equation of the first merged data T may be represented by Z in the form of Formula (3). For example, the first intermediate equation $Z = D+\rho zz^T$ includes a first eigenvalue sequence (i.e., D in Formula (3)); and the first eigenvalue sequence D is composed of a plurality of eigenvalue sequences $\Lambda_1$ and $\Lambda_2$ of each adjacent two pieces of leaf node data.

For example, as shown in FIG. 5, based on the first intermediate equation Z, a fourth library function may be invoked in the second library function to pre-process (e.g., reorder) the first merged data T, to obtain the pre-processed eigenvalue sequence D'; and the second intermediate equation Z' may be obtained by computing based on the pre-processed eigenvalue sequence D' and the first intermediate equation Z. For example, the second intermediate equation Z' is a secular equation. For example, an eigenvalue of the second intermediate equation Z' is the eigenvalue of the first merged data T.

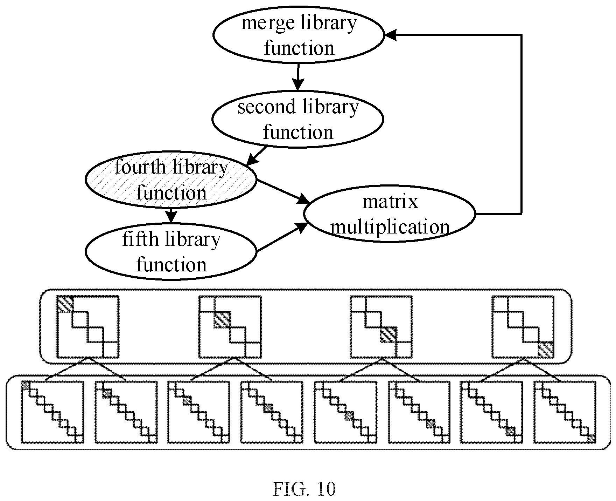

FIG. 10 is a schematic diagram of an example of pre-processing first merged data provided by at least one embodiment of the present disclosure. For example, FIG. 10 is an example of invoking the fourth library function in the second library function to pre-process the first merged data in FIG. 5.

For example, as shown in FIG. 10, the bottom layer includes a plurality of pieces of leaf node data, and the second to last layer is the first merged data formed by merging each adjacent two pieces of leaf node data. For example, the leaf node data may be the block data of the bottom layer in FIG. 4, and the first merged data may be the block data of the second to last layer in FIG. 4. For example, as shown in FIG. 10, the first merged data T includes two symmetric tridiagonal blocks $T_1$ and $T_2$ in the upper left corner and the lower right corner.

For example, as shown in FIG. 10, the fourth library function may be invoked in the second library function to reorder the first eigenvalue sequence D, to obtain the pre-processed eigenvalue sequence D'. For example, by reordering the eigenvalue sequences $\Lambda_1$ and $\Lambda_2$ in the first eigenvalue sequence D from large to small, the pre-processed eigenvalue sequence may be obtained: D'=diag(di, $d_2$, ..., $d_n$), where $d_1 > d_2 > ... > d_n$.

For example, as shown in FIG. 10, based on the pre-processed eigenvalue sequence, the fourth library function is further invoked to perform parallel update computation on at least one piece of first merged data, to obtain at least one piece of updated first merged data and a second intermediate equation of each piece of updated first merged data. For example, specifically, with respect to the first intermediate equation $Z = D+\rho zz^T$ (including a first parameter $\rho$ and a second parameter z) in the first merged data T, after the above-described update computation, the pre-processed eigenvalue sequence D' and the pre-processed second parameter z' may be obtained; based on the first parameter $\rho$, the pre-processed second parameter z' and the pre-processed eigenvalue sequence D', the second intermediate equation may be obtained: $Z' = D' + \rho z'z'^T$. For example, with respect to the first merged data T, the second intermediate equation $Z'$ is a secular equation, and the eigenvalue of the second intermediate equation $Z'$ is the eigenvalue of the first merged data T.

For example, in some examples, with respect to the pre-processed eigenvalue sequence $D' = diag(d_1, d_2, ..., d_n)$, in the case where $d_i - d_{i+1}$ is less than a given second threshold (where $i=1, 2, ..., n-1$), it may be affirmed that the eigenvalue $d_i$ in the pre-processed eigenvalue sequence $D'$ is contracted. For example, as shown in FIG. 10, based on the pre-processed eigenvalue sequence $D'$, the fourth library function may also be invoked to perform contraction processing on the reordered eigenvalue sequence $D'$. For example, the contraction processing includes recognizing the contracted eigenvalue, and then the processor apparatus may not perform any processing on an eigenvector corresponding to the contracted eigenvalue.

For example, as shown in FIG. 10, based on the reordered eigenvalue sequence having subjected to contraction processing, the fourth library function may be invoked to perform parallel update computation on at least one piece of first merged data, to obtain at least one piece of updated first merged data and a second intermediate equation of each piece of updated first merged data; the specific parallel update computation process is as described above, and no details will be repeated here.

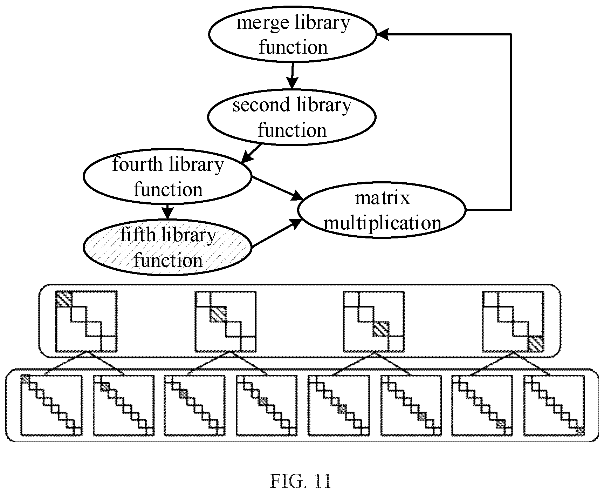

FIG. 11 is a schematic diagram of an example of performing parallel computation on a second intermediate equation provided by at least one embodiment of the present disclosure. For example, FIG. 11 is an example of invoking the fifth library function in the second library function to perform parallel computation on the second intermediate equation in FIG. 5.

For example, as shown in FIG. 11, after obtaining the updated first merged data and the second intermediate equation in FIG. 10, the fifth library function is invoked in the second library function to perform parallel computation on at least one second intermediate equation corresponding to at least one piece of first merged data, to obtain a feature parameter of a second intermediate equation corresponding to each piece of first merged data. For example, the feature parameter of the second intermediate equation includes a second eigenvalue and a second eigenvector; and the second eigenvalue is the eigenvalue of the first merged data.

For example, as shown in FIG. 11, further, matrix multiplication is invoked in the second library function, and the pre-processed eigenvalue sequence $D'$ is multiplied by the second eigenvector, to obtain the eigenvector of the first merged data.

For example, as shown in FIG. 10 and FIG. 11, by respectively invoking the fourth library function and the fifth library function just once in the second library function, the feature parameter (an eigenvalue and an eigenvector) of at least one piece of first merged data may be obtained, thereby implementing parallel computation on the at least one piece of first merged data.

For example, when a plurality of pieces of first merged data are obtained through merge, the plurality of pieces of first merged data need to be further merged, until the merged data is obtained. For example, in step S40 of FIG. 3, at least one merge and at least one parallel computation may be performed on at least one piece of first merged data based on the feature parameter of the each piece of first merged data, to obtain the merged data.

For example, in step S50 of FIG. 3, feature solving may be performed on the merged data, to obtain the feature parameter of the merged data; then, inverse normalized update is performed on the feature parameter of the merged data, to obtain the feature parameter of the input matrix data.

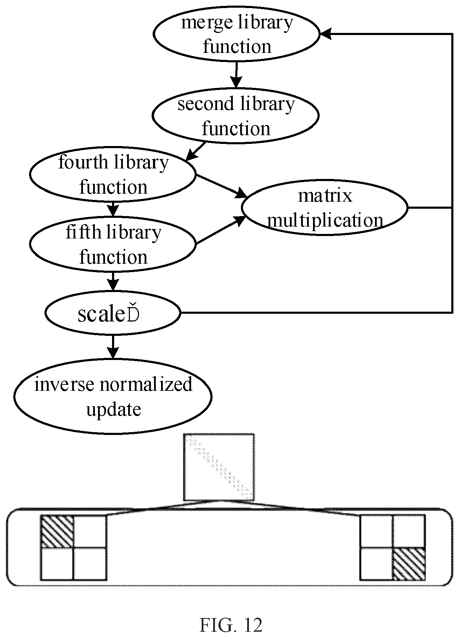

FIG. 12 is a schematic diagram of an example of merging to obtain merged data provided by at least one embodiment of the present disclosure. For example, FIG. 12 is an example of performing iterative merge to obtain the merged data in FIG. 5.

For example, as shown in FIG. 12, at least one merge and at least one parallel computation may be further performed iteratively on the plurality of pieces of first merged data again, based on the feature parameter of the each piece of first merged data; and for each iterative merge and parallel computation, the library function invocation mode, for example, that in FIG. 10 and FIG. 11 is adopted, so as to obtain the merged data. For example, the merged data may be the largest merged block of the top layer in FIG. 4.

For example, as shown in FIG. 12, in step S50 of FIG. 3, continue to adopt the above-described library function invocation mode to perform feature solving on the merged data, to obtain the feature parameter (including an eigenvalue and an eigenvector) of the merged data. For example, the eigenvector of the merged data is just the eigenvector of the input matrix data; however, because normalized update is firstly performed on the matrix data to be split before performing cyclic recursive split on the matrix data to be split, it is necessary to perform inverse normalized update on the eigenvalue of the merged data so as to obtain the eigenvalue of the final input matrix data.

For example, as shown in FIG. 12, an inverse normalization value is updated once in each iterative merge step; when merged data is obtained in the last iterative merge, a final inverse normalization value scale' may be obtained. For example, in the example in FIG. 8, because all elements of the data to be split are respectively divided by scale during normalized update, the eigenvalue of the merged data needs to be multiplied by the inverse normalization value scale' during inverse normalized update in FIG. 12, so as to finally obtain the eigenvalue of the input matrix data.

The data processing method provided by at least one embodiment of the present disclosure improves the resource (e.g., a plurality of library functions shown in FIG. 5 to FIG. 12) invocation and utilization mode of a processor apparatus (e.g., a GPU), which can fully invoke resources of the processor apparatus for computing the plurality of pieces of leaf node data in a parallel manner without invoking specific resources one by one for solving the plurality of pieces of leaf node data in a serial manner in the CPU, thereby alleviating the resource idle problem in the processor apparatus, and improving the computational efficiency of feature solving of the symmetric tridiagonal matrix in the processor apparatus.

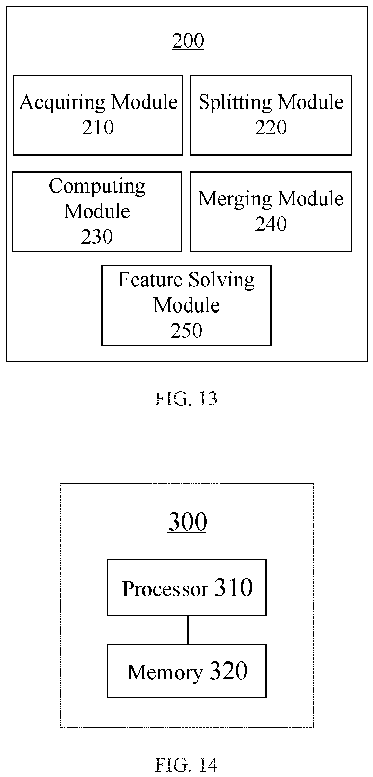

FIG. 13 is a schematic block diagram of a data processing apparatus provided by at least one embodiment of the present disclosure.

For example, as shown in FIG. 13, the data processing apparatus 200 includes an acquiring module 210, a splitting module 220, a computing module 230, a merging module 240, and a feature solving module 250.

For example, the acquiring module 210 is configured to acquire input matrix data. For example, the input matrix data is a symmetric tridiagonal matrix. That is, the acquiring module 210 may be configured to execute step S10 as shown in FIG. 3. For example, in some examples, the input matrix data is a double-precision symmetric tridiagonal matrix.

For example, the splitting module 220 is configured to perform matrix split on the input matrix data to obtain a plurality of pieces of leaf node data. That is, the splitting module 220 may be configured to execute step S20 as shown in FIG. 3.

For example, the computing module 230 is configured to perform parallel computation on the plurality of pieces of leaf node data, to obtain a feature parameter of each piece of leaf node data among the plurality of pieces of leaf node data. That is, the computing module 230 may be configured to execute step S30 as shown in FIG. 3. For example, the feature parameter includes an eigenvalue and an eigenvector.

For example, the merging module 240 is configured to perform at least one merge on the plurality of pieces of leaf node data, based on the feature parameter of the each piece of leaf node data, to obtain merged data. That is, the merging module 240 may be configured to execute step S40 as shown in FIG. 3.

For example, the feature solving module 250 is configured to perform feature solving on the input matrix data based on the merged data, to obtain a feature parameter of the input matrix data. That is, the feature solving module 250 may be configured to execute step S50 as shown in FIG. 3.

For example, the symmetric tridiagonal matrix includes a plurality of diagonal elements and a plurality of minor diagonal elements, and the splitting module 220 is further configured to: determine whether there is a first splitting point in the input matrix data, and a point between two diagonal elements is taken as the first splitting point, in response to a product of adjacent diagonal matrices of two diagonal elements among the plurality of diagonal elements being greater than a minor diagonal element adjacent to the two diagonal elements; and perform a first split on the input matrix data into a plurality of first sub-matrices based on the first splitting point, in response to there being a first splitting point in the input matrix data.

For example, with respect to the first split into a plurality of first sub-matrices, the splitting module 220 is further configured to: take a first sub-matrix whose size is less than or equal to a first threshold as first leaf node data, in response to there being a first sub-matrix whose size is less than or equal to the first threshold among the plurality of first sub-matrices, and the plurality of pieces of leaf node data include the first leaf node data obtained through the first split; and take a first sub-matrix whose size is greater than the first threshold as matrix data to be split, in response to there being a first sub-matrix whose size is greater than the first threshold among the plurality of first sub-matrices. For example, in response to there being no first splitting point in the input matrix data, the splitting module 220 is further configured to take the input matrix data as the matrix data to be split.

For example, with respect to the matrix data to be split, the splitting module 220 is further configured to: perform normalized update on the matrix data to be split; and perform cyclic recursive split on the matrix data to be split having subjected to normalized update, to obtain a plurality of pieces of second leaf node data. For example, the plurality of pieces of leaf node data include a plurality of pieces of second leaf node data obtained through cyclic recursive split. For example, the splitting module 220 is further configured to invoke a third library function to perform the cyclic recursive split on the matrix data to be split having subjected to normalized update.

For example, the computing module 230 is further configured to invoke a first library function to perform parallel computation on the plurality of pieces of leaf node data. Further, the computing module 230 is further configured to invoke the first library function to perform parallel computation on the plurality of pieces of second leaf node data and the first leaf node data, to obtain a feature parameter of each piece of second leaf node data among the plurality of pieces of second leaf node data and a feature parameter of the first leaf node data.

For example, the merging module 240 is further configured to invoke a second library function to perform at least one merge on the plurality of pieces of leaf node data based on the feature parameter of the each piece of leaf node data. Further, the merging module 240 is further configured to: perform pairwise merge on each adjacent two pieces of leaf node data among the plurality of pieces of leaf node data to obtain at least one piece of first merged data; and perform parallel computation on at least one piece of first merged data based on the feature parameter of the each piece of leaf node data, to obtain a feature parameter of each piece of first merged data among the at least one piece of first merged data. For example, the merging module 240 is further configured to invoke a merge function library to perform pairwise merge on the each adjacent two pieces of leaf node data among the plurality of pieces of leaf node data.

For example, the feature parameter of the each piece of first merged data includes an eigenvalue and an eigenvector of the each piece of first merged data, a feature parameter of the each adjacent two pieces of leaf node data includes a plurality of eigenvalues, and the plurality of eigenvalues are combined to form a first eigenvalue sequence. For example, the merging module 240 is further configured to: invoke a second library function to perform parallel computation on the at least one piece of first merged data, to obtain a first intermediate equation of the each piece of first merged data, in which the first intermediate equation includes the first eigenvalue sequence; pre-process the each piece of first merged data in the second library function based on the first intermediate equation, to obtain a pre-processed eigenvalue sequence and a second intermediate equation; perform parallel computation on at least one second intermediate equation corresponding to the at least one piece of first merged data in the second library function, to obtain a feature parameter of the second intermediate equation corresponding to the each piece of first merged data, in which the feature parameter of the second intermediate equation includes a second eigenvalue and a second eigenvector, and the second eigenvalue is the eigenvalue of the each piece of first merged data; and multiply the pre-processed eigenvalue sequence with the second eigenvector in the second library function, to obtain the eigenvector of the each piece of first merged data.

For example, with respect to the pre-processing process of the each piece of first merged data, the merging module 240 is further configured to: invoke a fourth library function to reorder the first eigenvalue sequence, to obtain the pre-processed eigenvalue sequence; and invoke the fourth library function to perform parallel update computation on the at least one piece of first merged data based on the pre-processed eigenvalue sequence, to obtain at least one piece of updated first merged data and a second intermediate equation of each piece of updated first merged data among the at least one piece of updated first merged data. For example, further, with respect to the process of invoking the fourth library function to perform parallel update computation on the at least one piece of first merged data, the merging module 240 is further configured to: invoke the fourth library function to perform contraction processing on the pre-processed eigenvalue sequence based on the pre-processed eigenvalue sequence; invoke the fourth library function to perform parallel update computation on the at least one piece of first merged data based on the eigenvalue sequence having subjected to contraction processing, to obtain at least one piece of updated first merged data and the second intermediate equation of the each piece of updated first merged data.

For example, in response to the plurality of pieces of leaf node data including two pieces of leaf node data, the first merged data is the merged data. For example, in response to the plurality of pieces of leaf node data including more than two pieces of second leaf node data, the merging module 240 is further configured to perform at least one merge and at least one parallel computation on the at least one piece of first merged data based on the feature parameter of the each piece of first merged data, to obtain the merged data.

For example, the feature solving module 250 is further configured to: perform feature solving on the merged data, to obtain a feature parameter of the merged data; and perform inverse normalized update on the feature parameter of the merged data, to obtain the feature parameter of the input matrix data.

In the above-described process of describing the data processing method shown in FIG. 3, details involving operations of the above-described data processing apparatus 200 have already been introduced. Therefore, for the sake of brevity, no details will be repeated here. The description of FIG. 3 to FIG. 12 above may be referred to for relevant details.

It should be noted that the above-described respective modules in the data processing apparatus 200 shown in FIG. 13 may be respectively configured to be software, hardware, firmware, or any combination of the above that executes specific functions. For example, these modules may correspond to special-purpose integrated circuits, or may also correspond to pure software codes, or may also correspond to modules that combine software and hardware. As an example, the apparatus described with reference to FIG. 13 may be a PC computer, a tablet apparatus, a personal digital assistant, a smartphone, a web application, or other apparatus capable of executing program instructions, but not limited thereto.

In addition, although the data processing apparatus 200 is divided into modules configured to respectively execute corresponding processing when described above, it is clear to those skilled in the art that the processing executed by the respective modules may also be executed without any specific module division or clear boundaries between the respective modules in the apparatus. In addition, the data processing apparatus 200 as described above with reference to FIG. 13 is not limited to including the modules as described above, but may also have other modules (e.g., writing modules, control modules, etc.) added according to needs, or the above modules may also be combined.

At least one embodiment of the present disclosure further provides an electronic device, and the electronic device includes a processor and a memory; the memory includes one or more computer program modules; the one or more computer program modules are stored in the memory and are configured to be executed by the processor, and the one or more computer program modules are configured to implement the data processing method provided by the embodiments of the present disclosure as described above. For example, the processor may be a single-core processor or a multi-core processor.

FIG. 14 is a schematic block diagram of an electronic device provided by at least one embodiment of the present disclosure.

For example, as shown in FIG. 14, the electronic device 300 includes a processor 310 and a memory 320. For example, the memory 320 is configured to store non-transitory computer readable instructions (e.g., one or more computer program modules). The processor 310 is configured to run the non-transitory computer readable instructions, and the non-transitory computer readable instructions, when run by the processor 310, may execute one or more steps according to the data processing method as described above. The memory 320 and the processor 310 may be interconnected through a bus system and/or other forms of connection mechanisms (not shown).

For example, the processor 310 may be a Central Processing Unit (CPU), a Graphics Processing Unit (GPU), a Digital Signal Processor (DSP), or other form of processing unit having a data processing capability and/or a program execution capability, for example, a Field Programmable Gate Array (FPGA), etc.; for example, the Central Processing Unit (CPU) may be an X86, RISC-V, or ARM architecture, etc. The processor 310 may be a general-purpose processor or a special-purpose processor, and may control other components in the electronic device 300 to execute desired functions.

For example, the memory 320 may include any combination of one or more computer program products, and the computer program products may include various forms of computer readable storage media, for example, a volatile memory and/or a non-volatile memory. The volatile memory may include, for example, a Random Access Memory (RAM) and/or a cache, or the like. The non-volatile memory may include, for example, a Read-Only Memory (ROM), a hard disk, an Erasable Programmable Read Only Memory (EPROM), a portable Compact Disk Read-Only Memory (CD-ROM), a USB memory, a flash memory, or the like. One or more computer program modules may be stored on the computer readable storage medium, and the processor 310 may run the one or more computer program modules to implement various functions of the electronic device 300. Various applications and various data, as well as various data used and/or generated by the applications may also be stored on the computer readable storage medium.

It should be noted that in the embodiments of the present disclosure, the above description of the data processing method provided by at least one embodiment of the present disclosure may be referred to for specific functions and technical effects of the electronic device 300, and no details will be repeated here.

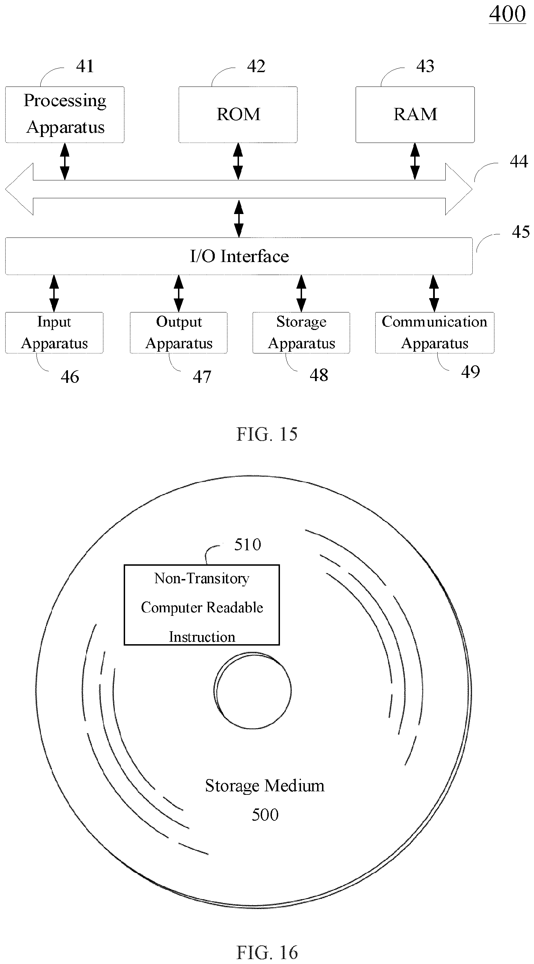

FIG. 15 is a schematic block diagram of another electronic device provided by at least one embodiment of the present disclosure.

For example, as shown in FIG. 15, the electronic device 400, for example, is suitable for implementing the data processing method provided by the embodiments of the present disclosure. It should be noted that the electronic device 400 shown in FIG. 15 is only an example, and will not impose any limitation on the function and scope of use of the embodiments of the present disclosure.

For example, as shown in FIG. 15, the electronic device 400 may include a processing apparatus 41 (e.g., a central processing unit, a graphics processor, etc.), which may execute various appropriate actions and processing according to a program stored in a Read-Only Memory (ROM) 42 or a program loaded from a storage apparatus 48 into a Random Access Memory (RAM) 43. The Random Access Memory (RAM) 43 further stores various programs and data required for operation of the electronic device 400 for cache system simulation. The processing apparatus 41, the ROM 42, and the RAM 43 are connected with each other through a bus 44. An input/output (I/O) interface 45 is also coupled to the bus 44. Usually, apparatuses below may be coupled to the I/O interface 45: input apparatuses 46 including, for example, a touch screen, a touch pad, a keyboard, a mouse, a camera, a microphone, an accelerometer, a gyroscope, etc.; output apparatuses 47 including, for example, a Liquid Crystal Display (LCD), a speaker, a vibrator, etc.; storage apparatuses 48 including, for example, a magnetic tape or a hard disk, etc.; and a communication apparatus 49. The communication apparatus 490 may allow the electronic device 400 to perform wireless or wired communication with other electronic device to exchange data.

Although FIG. 15 shows the electronic device 400 having various apparatuses, it should be understood that, it is not required to implement or have all the apparatuses shown, and the electronic device 400 may alternatively implement or have more or fewer apparatuses.

The above description on the data processing method may be referred to for detailed description and technical effects of the electronic device 400, and no details will be repeated here.

FIG. 16 is a schematic diagram of a storage medium provided by at least one embodiment of the present disclosure.

For example, as shown in FIG. 16, the storage medium 500 stores non-transitory computer readable instructions 510. For example, the non-transitory computer readable instructions 510, when executed by a computer, may execute one or more steps in the data processing method as described above.

For example, the storage medium 500 may be applied to the above-described electronic device 300. For example, the storage medium 500 may be a memory 320 in the electronic device 300. For example, the corresponding description of the memory 320 in the electronic device 300 shown in FIG. 14 may be referred to for relevant description of the storage medium 500, and no details will be repeated here.

For the present disclosure, the following statements should be noted:

(1) The drawings involve only the structure(s) in connection with the embodiment(s) of the present disclosure, and other structure(s) can be referred to common design(s).

(2) In case of no conflict, features in one embodiment or in different embodiments can be combined to obtain new embodiments.

What have been described above are only specific implementations of the present disclosure, the protection scope of the present disclosure is not limited thereto. Any modifications or substitutions easily occur to those skilled in the art within the technical scope of the present disclosure should be within the protection scope of the present disclosure. Therefore, the protection scope of the present disclosure should be based on the protection scope of the claims.

**Claims**

1. A data processing method, comprising:

acquiring input matrix data, wherein the input matrix data is a symmetric tridiagonal matrix;
performing one or more matrix splits on the input matrix data to obtain a plurality of pieces of leaf node data;
performing parallel computation on the plurality of pieces of leaf node data, to obtain a feature parameter of each piece of leaf node data among the plurality of pieces of leaf node data;
performing at least one merge on the plurality of pieces of leaf node data, based on the feature parameter of the each piece of leaf node data, to obtain merged data; and
performing feature solving on the input matrix data based on the merged data, to obtain a feature parameter of the input matrix data.

2. The data processing method according to claim 1, wherein the feature parameter comprises an eigenvalue and an eigenvector.

3. The data processing method according to claim 1 or 2, wherein performing parallel computation on the plurality of pieces of leaf node data, comprises:
invoking a first library function to perform parallel computation on the plurality of pieces of leaf node data.

4. The data processing method according to any one of claims 1 to 3, wherein performing at least one merge on the plurality of pieces of leaf node data, based on the feature parameter of the each piece of leaf node data, comprises:
invoking a second library function to perform at least one merge on the plurality of pieces of leaf node data, based on the feature parameter of the each piece of leaf node data.

5. The data processing method according to any one of claims 1 to 4, wherein the symmetric tridiagonal matrix comprises a plurality of diagonal elements and a plurality of minor diagonal elements; and

performing one or more matrix splits on the input matrix data to obtain a plurality of pieces of leaf node data, comprises:
determining whether there is a first splitting point in the input matrix data, wherein a point between two diagonal elements is taken as the first splitting point, in response to a product of adjacent diagonal matrices of two diagonal elements among the plurality of diagonal elements being greater than a minor diagonal element adjacent to the two diagonal elements; and
performing a first split on the input matrix data into a plurality of first sub-matrices based on the first splitting point, in response to there being a first splitting point in the input matrix data.

6. The data processing method according to claim 5, wherein performing one or more matrix splits on the input matrix data to obtain a plurality of pieces of leaf node data, further comprises:

taking a first sub-matrix whose size is less than or equal to a first threshold as first leaf node data, in response to there being a first sub-matrix whose size is less than or equal to the first threshold among the plurality of first sub-matrices, wherein the plurality of pieces of leaf node data comprise the first leaf node data obtained through the first split; and
taking a first sub-matrix whose size is greater than the first threshold as matrix data to be split, in response to there being a first sub-matrix whose size is greater than the first threshold among the plurality of first sub-matrices.

7. The data processing method according to claim 5, wherein performing one or more matrix splits on the input matrix data to obtain a plurality of pieces of leaf node data, further comprises:
taking the input matrix data as matrix data to be split, in response to there being no first splitting point in the input matrix data.

8. The data processing method according to claim 6 or 7, wherein performing one or more matrix splits on the input matrix data to obtain a plurality of pieces of leaf node data, further comprises:

   performing normalized update on the matrix data to be split; and
   performing cyclic recursive split on the matrix data to be split having subjected to the normalized update, to obtain a plurality of pieces of second leaf node data,
   wherein the plurality of pieces of leaf node data comprise the plurality of pieces of second leaf node data obtained through the cyclic recursive split.

9. The data processing method according to claim 8, wherein performing cyclic recursive split on the matrix data to be split having subjected to the normalized update, comprises:
invoking a third library function to perform the cyclic recursive split on the matrix data to be split having subjected to the normalized update.

10. The data processing method according to claim 8 or 9, wherein performing parallel computation on the plurality of pieces of leaf node data, to obtain a feature parameter of each piece of leaf node data among the plurality of pieces of leaf node data, comprises: invoking a first library function to perform parallel computation on the plurality of pieces of second leaf node data and the first leaf node data, to obtain a feature parameter of each piece of second leaf node data among the plurality of pieces of second leaf node data and a feature parameter of the first leaf node data.

11. The data processing method according to claim 1, wherein performing at least one merge on the plurality of pieces of leaf node data, based on the feature parameter of the each piece of leaf node data, to obtain merged data, comprises:

   performing pairwise merge on each adjacent two pieces of leaf node data among the plurality of pieces of leaf node data, to obtain at least one piece of first merged data; and
   performing parallel computation on the at least one piece of first merged data based on the feature parameter of the each piece of leaf node data, to obtain a feature parameter of each piece of first merged data among the at least one piece of first merged data.

12. The data processing method according to claim 11, wherein performing pairwise merge on each adjacent two pieces of leaf node data among the plurality of pieces of leaf node data, comprises:
invoking a merge function library to perform pairwise merge on the each adjacent two pieces of leaf node data among the plurality of pieces of leaf node data.

13. The data processing method according to claim 11 or 12, wherein the feature parameter of the each piece of first merged data comprises an eigenvalue and an eigenvector of the each piece of first merged data;

   a feature parameter of the each adjacent two pieces of leaf node data comprises a plurality of eigenvalues, and the plurality of eigenvalues are combined to form a first eigenvalue sequence; and
   performing parallel computation on the at least one piece of first merged data based on the feature parameter of the each piece of leaf node data, to obtain a feature parameter of each piece of first merged data among the at least one piece of first merged data, comprises:
   invoking a second library function to perform parallel computation on the at least one piece of first merged data, to obtain a first intermediate equation of the each piece of first merged data, wherein the first intermediate equation comprises the first eigenvalue sequence;
   pre-processing the each piece of first merged data in the second library function based on the first intermediate equation, to obtain a pre-processed eigenvalue sequence and a second intermediate equation;
   performing parallel computation on at least one second intermediate equation corresponding to the at least one piece of first merged data in the second library function, to obtain a feature parameter of the second intermediate equation corresponding to the each piece of first merged data, wherein the feature parameter of the second intermediate equation comprises a second eigenvalue and a second eigenvector, and the second eigenvalue is the eigenvalue of the each piece of first merged data; and

multiplying the pre-processed eigenvalue sequence with the second eigenvector in the second library function, to obtain the eigenvector of the each piece of first merged data.

14. The data processing method according to claim 13, wherein pre-processing the each piece of first merged data in the second library function based on the first intermediate equation, to obtain a pre-processed eigenvalue sequence and a second intermediate equation, comprises:

invoking a fourth library function to reorder the first eigenvalue sequence, to obtain the pre-processed eigenvalue sequence; and

invoking the fourth library function to perform parallel update computation on the at least one piece of first merged data based on the pre-processed eigenvalue sequence, to obtain at least one piece of updated first merged data and a second intermediate equation of each piece of updated first merged data among the at least one piece of updated first merged data.

15. The data processing method according to claim 14, wherein invoking the fourth library function to perform parallel update computation on the at least one piece of first merged data based on the pre-processed eigenvalue sequence, to obtain at least one piece of updated first merged data and a second intermediate equation of each piece of updated first merged data among the at least one piece of updated first merged data, comprises:

invoking the fourth library function to perform contraction processing on the pre-processed eigenvalue sequence, based on the pre-processed eigenvalue sequence; and

invoking the fourth library function to perform parallel update computation on the at least one piece of first merged data based on the eigenvalue sequence having subj ected to contraction processing, to obtain the at least one piece of updated first merged data and the second intermediate equation of the each piece of updated first merged data.

16. The data processing method according to any one of claims 11 to 15, wherein in response to the plurality of pieces of leaf node data comprising two pieces of leaf node data, the first merged data is the merged data.

17. The data processing method according to any one of claims 11 to 15, wherein in response to the plurality of pieces of leaf node data comprising more than two pieces of second leaf node data,

performing at least one merge on the plurality of pieces of leaf node data, based on the feature parameter of the each piece of leaf node data, to obtain merged data, further comprises:

performing at least one merge and at least one parallel computation on the at least one piece of first merged data based on the feature parameter of the each piece of first merged data, to obtain the merged data.

18. The data processing method according to any one of claims 1 to 17, wherein performing feature solving on the input matrix data based on the merged data, to obtain a feature parameter of the input matrix data, comprises:

performing feature solving on the merged data, to obtain a feature parameter of the merged data; and

performing inverse normalized update on the feature parameter of the merged data, to obtain the feature parameter of the input matrix data.

19. The data processing method according to any one of claims 1 to 18, wherein the symmetric tridiagonal matrix is a double-precision matrix.

20. A data processing apparatus, comprising:

an acquiring module, configured to acquire input matrix data, wherein the input matrix data is a symmetric tridiagonal matrix;

a splitting module, configured to perform matrix split on the input matrix data to obtain a plurality of pieces of leaf node data;

a computing module, configured to perform parallel computation on the plurality of pieces of leaf node data, to obtain a feature parameter of each piece of leaf node data among the plurality of pieces of leaf node data;
a merging module, configured to perform at least one merge on the plurality of pieces of leaf node data, based on the feature parameter of the each piece of leaf node data, to obtain merged data; and
a feature solving module, configured to perform feature solving on the input matrix data based on the merged data, to obtain a feature parameter of the input matrix data.

21. The data processing apparatus according to claim 20, wherein the feature parameter comprises an eigenvalue and an eigenvector.

22. The data processing apparatus according to claim 20 or 21, wherein the computing module is further configured to invoke a first library function to perform parallel computation on the plurality of pieces of leaf node data.

23. The data processing apparatus according to any one of claims 20 to 22, wherein the merging module is further configured to invoke a second library function to perform at least one merge on the plurality of pieces of leaf node data based on the feature parameter of the each piece of leaf node data.

24. The data processing apparatus according to any one of claims 20 to 23, wherein the feature solving module is further configured to:

perform feature solving on the merged data, to obtain a feature parameter of the merged data; and
perform inverse normalized update on the feature parameter of the merged data, to obtain the feature parameter of the input matrix data.

25. An electronic device, comprising:

a processor; and
a memory, comprising one or more computer program modules,
wherein the one or more computer program modules are stored in the memory and are configured to be executed by the processor, and the one or more computer program modules are configured to implement the data processing method according to any one of claims 1 to 19.

26. A storage medium, storing non-transitory computer readable instructions, wherein the non-transitory computer readable instructions, when executed by a computer, implement the data processing method according to any one of claims 1 to 19.

$$T = \begin{bmatrix} a_1 & b_1 & 0 & 0 & 0 & 0 & 0 & 0 & 0 & 0 \\ b_1 & a_2 & b_2 & 0 & 0 & 0 & 0 & 0 & 0 & 0 \\ 0 & b_2 & \ldots & \ldots & 0 & 0 & 0 & 0 & 0 & 0 \\ 0 & 0 & \ldots & a_{m-1} & b_{m-1} & 0 & 0 & 0 & 0 & 0 \\ 0 & 0 & 0 & b_{m-1} & a_m & b_m & 0 & 0 & 0 & 0 \\ 0 & 0 & 0 & 0 & b_m & a_{m+1} & b_{m+1} & 0 & 0 & 0 \\ 0 & 0 & 0 & 0 & 0 & b_{m+1} & a_{m+2} & \ldots & 0 & 0 \\ 0 & 0 & 0 & 0 & 0 & 0 & \ldots & \ldots & b_{n-2} & 0 \\ 0 & 0 & 0 & 0 & 0 & 0 & 0 & b_{n-2} & a_{n-1} & b_{n-1} \\ 0 & 0 & 0 & 0 & 0 & 0 & 0 & 0 & b_{n-1} & a_n \end{bmatrix}$$

FIG. 1

$$T = \left[ \begin{array}{cccc|ccccc} a_1 & b_1 & & & & & & & \\ b_1 & \ddots & \ddots & & & & & & \\ & \ddots & a_{m-1} & b_{m-1} & & & & & \\ & & b_{m-1} & a_m & b_m & & & & \\ \hline & & & b_m & a_{m+1} & b_{m+1} & & & \\ & & & & b_{m+1} & a_{m+2} & \ddots & & \\ & & & & & \ddots & \ddots & b_{n-1} & \\ & & & & & & b_{n-1} & a_n \end{array} \right]$$

$$= \left[ \begin{array}{cccc|ccccc} a_1 & b_1 & & & & & & & \\ b_1 & \ddots & \ddots & & & & & & \\ & \ddots & a_{m-1} & b_{m-1} & & & & & \\ & & b_{m-1} & a_m - |b_m| & & 0 & & & \\ \hline & & & 0 & a_{m+1} - |b_m| & b_{m+1} & & & \\ & & & & b_{m+1} & a_{m+2} & \ddots & & \\ & & & & & \ddots & \ddots & b_{n-1} & \\ & & & & & & b_{n-1} & a_n \end{array} \right] + \left[ \begin{array}{c|c} & \\ \hline |b_m| & b_m \\ b_m & |b_m| \\ \end{array} \right]$$

FIG. 2

S10     Acquiring input matrix data;

S20     Performing one or more matrix splits on the input matrix data to obtain a plurality of pieces of leaf node data;

S30     Performing parallel computation on the plurality of pieces of leaf node data, to obtain a feature parameter of each piece of leaf node data among the plurality of pieces of leaf node data;

S40     Performing at least one merge on the plurality of pieces of leaf node data, based on the feature parameter of the each piece of leaf node data, to obtain merged data;

S50     Performing feature solving on the input matrix data based on the merged data, to obtain a feature parameter of the input matrix data.

FIG. 3

FIG. 4

FIG. 5

S210 — Determining whether there is a first splitting point in the input matrix data;

S220 — Performing a first split on the input matrix data into a plurality of first sub-matrices based on the first splitting point, in response to there being a first splitting point in the input matrix data;

S250 — Taking the input matrix data as the matrix data to be split, in response to there being no first splitting point in the input matrix data;

S230 — Taking a first sub-matrix whose size is less than or equal to the first threshold as the first leaf node data, in response to there being a first sub-matrix whose size is less than or equal to the first threshold among the plurality of first sub-matrices;

S240 — Taking a first sub-matrix whose size is greater than the first threshold as the matrix data to be split, in response to there being a first sub-matrix whose size is greater than the first threshold among the plurality of first sub-matrices;

FIG. 6

$$\begin{bmatrix} d_1 & e_1 & & & & & & \\ e_1 & d_2 & e_2 & & & & & \\ & e_2 & \ddots & & & & & \\ & & & d_{x-1} & e_{x-1} & & & \\ & & & e_{x-1} & d_x & e_x & & \\ & & & & e_x & & & \\ & & & & & \ddots & \ddots & \\ & & & & & & \ddots & \\ & & & & & & d_m & e_m \\ & & & & & & e_m & d_{m+1} & e_{m+1} \\ & & & & & & & e_{m+1} & \ddots & \ddots \\ & & & & & & & & \ddots & d_n \end{bmatrix}$$

FIG. 7

$$\begin{bmatrix} d_x & e_x & & & \\ e_x & d_{x+1} & e_{x+1} & & \\ & e_{x+1} & \ddots & \ddots & \\ & & \ddots & d_{m-1} & e_{m-1} \\ & & & e_{m-1} & d_m \end{bmatrix} \rightarrow \begin{bmatrix} \dfrac{d_x}{scale} & \dfrac{e_x}{scale} & & & \\ \dfrac{e_x}{scale} & \dfrac{d_{x+1}}{scale} & \dfrac{e_{x+1}}{scale} & & \\ & \dfrac{e_{x+1}}{scale} & \ddots & \ddots & \\ & & \ddots & \dfrac{d_{m-1}}{scale} & \dfrac{e_{m-1}}{scale} \\ & & & \dfrac{e_{m-1}}{scale} & \dfrac{d_m}{scale} \end{bmatrix}$$

FIG. 8

FIG. 9

FIG. 10

FIG. 11

FIG. 12

200

| Acquiring Module 210 | Splitting Module 220 |
| Computing Module 230 | Merging Module 240 |
| | Feature Solving Module 250 |

FIG. 13

300

Processor 310

Memory 320

FIG. 14

400

| 41 | 42 | 43 |
|---|---|---|
| Processing Apparatus | ROM | RAM |

44

45

I/O Interface

| Input Apparatus | Output Apparatus | Storage Apparatus | Communication Apparatus |
|---|---|---|---|
| 46 | 47 | 48 | 49 |

FIG. 15

510

Non-Transitory Computer Readable Instruction

Storage Medium

500

FIG. 16

## INTERNATIONAL SEARCH REPORT

| | |
|---|---|
| International application No. | **PCT/CN2023/118852** |

**A.   CLASSIFICATION OF SUBJECT MATTER**

G06F 17/16(2006.01)i

According to International Patent Classification (IPC) or to both national classification and IPC

**B.   FIELDS SEARCHED**

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNTXT; CNABS; EPTXT; USTXT; WOTXT; VEN; CNKI; IEEE: 对称, 三对角, 矩阵, 分割, 叶, 结点, 并行, 特征, 合并, symmetric, tridiagonal, matrix, segment, leaf, node, parallel, feature, merge

**C.   DOCUMENTS CONSIDERED TO BE RELEVANT**

| Category* | Citation of document, with indication, where appropriate, of the relevant passages | Relevant to claim No. |
|---|---|---|
| PX | CN 115952391 A (HYGON INFORMATION TECHNOLOGY CO., LTD.) 11 April 2023 (2023-04-11)<br>       claims 1-26 | 1-26 |
| X | 朱京乔 等 (ZHU, Jingqiao et al.). "基于分治法求解对称三对角矩阵特征问题的 MPI / Cilk 混合并行算法 (Hybrid Parallel Algorithm Based on Divided and Conquer Method Using MPI/ Cilk for Symmetric Tridiagonal Eigenproblem)"<br>郑州大学学报(理学版) (Journal of Zhengzhou University(Natural Science Edition)),<br>Vol. 52, No. 1, 31 March 2020 (2020-03-31), pages 33-38<br>ISSN: 1671-6841,<br>       pages 33-36 | 1-26 |
| X | 朱京乔 等 (ZHU, Jingqiao et al.). "基于分治法求解对称三对角矩阵特征问题的混合并行实现 (Hybrid Parallel Algorithm Using MPI/Cilk for Symmetric Tridiagonal Eigenproblems)"<br>计算机系统应用 (Computer Systems & Applications),<br>Vol. 28, No. 9, 15 September 2019 (2019-09-15), pages 246-250<br>ISSN: 1003-3254,<br>       pages 246-250 | 1-26 |

☑ Further documents are listed in the continuation of Box C.   ☑ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 November 2023** | **11 November 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/118852**

**C.    DOCUMENTS CONSIDERED TO BE RELEVANT**

| Category* | Citation of document, with indication, where appropriate, of the relevant passages | Relevant to claim No. |
|---|---|---|
| A | CN 112015369 A (HUNAN ECONAVI TECHNOLOGY CO., LTD.) 01 December 2020 (2020-12-01)<br>entire document | 1-26 |
| A | US 2019138568 A1 (NVIDIA CORP.) 09 May 2019 (2019-05-09)<br>entire document | 1-26 |

Form PCT/ISA/210 (second sheet) (July 2022)

**INTERNATIONAL SEARCH REPORT**
Information on patent family members

International application No.

**PCT/CN2023/118852**

| Patent document cited in search report | | | Publication date (day/month/year) | Patent family member(s) | | | Publication date (day/month/year) |
|---|---|---|---|---|---|---|---|
| CN | 115952391 | A | 11 April 2023 | None | | | |
| CN | 112015369 | A | 01 December 2020 | CN | 112015369 | B | 16 September 2022 |
| US | 2019138568 | A1 | 09 May 2019 | US | 10867008 | B2 | 15 December 2020 |

Form PCT/ISA/210 (patent family annex) (July 2022)

**EP 4 421 660 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211595645